# EUROPÄISCHE PATENTSCHRIFT

(11) **EP 3 828 588 B1**
(45) Veröffentlichungstag und Bekanntmachung des Hinweises auf die Patenterteilung: **24.11.2021**
(21) Anmeldenummer: 20202084.8
(22) Anmeldetag: 15.10.2020
(51) Int. Cl.: G01S 7/483, G01S 17/88, G01S 17/36, G01S 17/894, G01S 7/4915

(54) **3D-LICHTLAUFZEITKAMERA UND VERFAHREN ZUR ERFASSUNG DREIDIMENSIONALER BILDDATEN**
3D RADIATED LIGHT CAMERA AND METHOD FOR RECORDING THREE-DIMENSIONAL IMAGE DATA
CAMÉRA TEMPS DE VOL 3D ET PROCÉDÉ DE DÉTECTION DES DONNÉES D'IMAGE TRIDIMENSIONNELLES

(30) Priorität: 26.11.2019 DE 102019131988
(43) Veröffentlichungstag der Anmeldung: 02.06.2021
(73) Patentinhaber: SICK AG, 79183 Waldkirch (DE)
(72) Erfinder: Heinz, Matthias, 79183 Waldkirch (DE); Pfister, Thorsten, 79111 Freiburg (DE); Baak, Josef, 79183 Waldkirch (DE)

(56) Entgegenhaltungen:
- EP-A1- 1 777 747
- DE-B4-102013 207 653
- US-A1- 2019 107 608

## Beschreibung

Die Erfindung betrifft eine 3D-Lichtlaufzeitkamera und ein Verfahren zur Erfassung dreidimensionaler Bilddaten aus einem Erfassungsbereich nach dem Oberbegriff von Anspruch 1 beziehungsweise 15.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben zu lösen.

In der Automatisierungstechnik beispielsweise können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

Bei Fahrzeugen, die auf öffentlichen Straßen oder in abgeschlossener Umgebung speziell im Bereich der Fabrik- und Logistikautomatik verkehren, soll mit einer 3D-Kamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle), AGCs (Automated Guided Cart), AMRs (Autonomous Mobile Robot) oder Flurförderzeuge. Die Bilddaten werden genutzt, um die autonome Navigation zu ermöglichen oder einen Fahrer zu unterstützen, unter anderem um Hindernisse zu erkennen, Kollisionen zu vermeiden oder das Be- und Entladen von Transportgütern einschließlich Kartons, Paletten, Containern oder Anhängern zu erleichtern.

In der Sicherheitstechnik erfasst die 3D-Kamera Personen in der Umgebung einer Gefahrenstelle, beispielsweise einer Maschine oder speziell eines Roboters. Bei Erkennung eines unzulässigen Eingriffs in ein Schutzvolumen oder Unterschreiten eines Sicherheitsabstands zu der Maschine erfolgt eine sicherheitsgerichtete Reaktion, um einen Unfall zu vermeiden. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Zur Ermittlung der Tiefeninformationen sind verschiedene Verfahren bekannt. In dieser Beschreibung wird eine auf einem Phasenverfahren basierende Lichtlaufzeitmessung (TOF, Time of Flight oder Lidar, Light Detection and Ranging) betrachtet. Dabei wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind jedoch nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist.

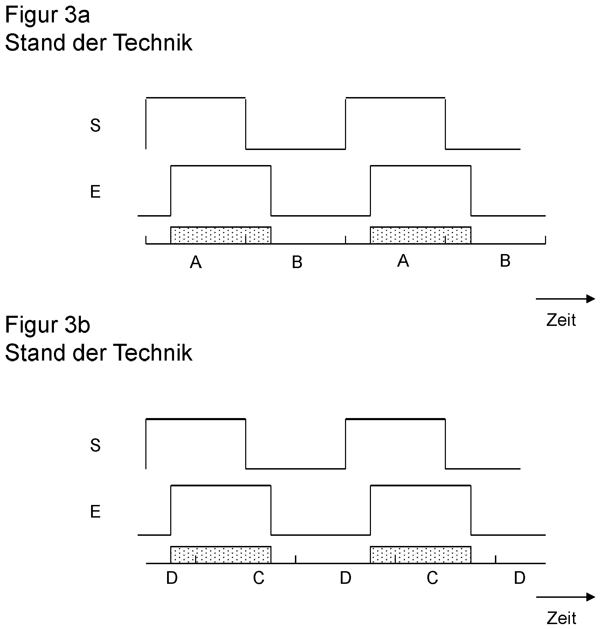

Figur 3a zeigt ein herkömmliches Modulationsschema. Oben ist mit S das Sendelicht dargestellt, das mit der Modulationsfrequenz periodisch moduliert wird. Das zurückkehrende Empfangslicht darunter ist mit E bezeichnet und weist je nach Abstand des Objekts, an dem das Sendelicht zurückgeworfen wurde, einen Phasenversatz zum Sendelicht S auf. Unten sind Zeitabschnitte gezeigt, die Ladungsspeichern des jeweiligen Pixels der Kamera zugewiesen sind, in denen die innerhalb des jeweiligen Zeitabschnitts erzeugten Photoelektronen gespeichert werden. Die Zeitabschnitte müssen nicht wie gezeigt bündig mit dem Sendelicht gewählt sein, aber ein etwaiger Zeitversatz sollte berücksichtigt werden, da sich sonst ein Messfehler der Phase und damit des Abstands ergibt.

In Figur 3a gibt es zwei verschiedene Ladungsspeicher A und B an jedem Pixel, zwischen denen mit der Modulationsfrequenz des Sendelichts hin- und her geschaltet wird. Es wird über eine Vielzahl von Modulationsperioden hinweg integriert, d.h. die auflaufenden Ladungsträger werden aufsummiert, und erst dann wird die Gesamtladung aus den Pixeln ausgelesen, wobei Figur 3a zwei solche Modulationsperioden zeigt. Die gesuchte Phase ergibt sich aus B/(A+B).

Ein Nachteil dieser einfachen Messung ist die Empfindlichkeit gegenüber Fremd- oder Hintergrundlicht. Zwar ist die Mindestanzahl für die Phasenbestimmung eines periodischen Signals, wie oben gesagt, mit den zwei Werten A und B gerade so erreicht. Für die zusätzliche Berücksichtigung der weiteren Variable Hintergrundlicht, die bei Annahme eines konstanten Pegels eine Konstante ist, fehlt aber mindestens ein weiterer Abtastwert. Um auch Hintergrundlicht zu berücksichtigen, und aus weiteren Gründen wie dem Ausgleich von Nichtlinearitäten und Unsymmetrien in den Pixeln des Bildsensors, die relativ hohe unbekannte systematische Messabweichungen verursachen, können zusätzliche Messungen durchgeführt werden. Es sind dann mehr als zwei Einzelmessungen erforderlich, um einen Tiefenwert pro Pixel zu erhalten, oder anders ausgedrückt besteht ein Frame der 3D-Bildaufnahme aus mehr als zwei Einzelmessungen. Zur Bestimmung des Hintergrundlichts besteht alternativ die Möglichkeit, die Anzahl der Ladungsspeicher der Pixel zu erhöhen, wobei allerdings damit ohne wiederholte Einzelmessungen kein Ausgleich von Asymmetrien in den Pixeln erreicht ist.

Ein erweitertes Modulationsschema für vier Abtastwerte ist gemeinsam in den Figuren 3a und 3b dargestellt. Mit der Messung gemäß Figur 3a werden die Werte A und B bestimmt. Es folgt eine weitere Messung gemäß Figur 3b, in dem die Zeitabschnitte, nach denen jeweils zwischen den beiden Ladungsspeichern hin- und hergeschaltet wird, um 1/4 der Periode der Modulationsfrequenz verschoben ist. Um die so gewonnenen Messwerte zu unterscheiden, sind sie mit C und D bezeichnet. Die gesuchte Phase ergibt sich nun aus arctan((C-D)/(A-B)).

Eine einführende Diskussion der beiden anhand Figur 3a und 3b vorgestellten Verfahren findet sich beispielsweise in der Arbeit von Li, Larry, "Time-of-flight camera - an introduction", Technical white paper SLOA190B (2014).

Neben den skizzierten Messungen mit zwei oder vier Abtastwerten sind auch Varianten mit drei Abtastwerten bei 0°, 120° und 240° bekannt. In einer alternativen Bildsensorarchitektur sind die Messwerte der beiden Ladungsspeicher A und B nicht einzeln auslesbar, sondern es handelt sich um differentielle Pixel, die einen Wert A-B ausgeben. Weiterhin ist bekannt, die Abtastwerte wie beispielsweise A, B, C und D ein weiteres Mal bei 180° Phasenversatz zu messen, um Asymmetrien in den Pixeln zu kompensieren

Die jeweilige Anzahl von Abtastwerten bringt verschiedene Vor- und Nachteile mit sich, die für unterschiedliche Anwendungen sinnvoll sein können. Je mehr Abtastwerte gewonnen werden, desto höher wird die Messgenauigkeit beziehungsweise desto geringer werden die Tiefenmessabweichungen. Mit weniger Abtastwerten werden die Messfehler größer, dafür sinkt die Aufnahmezeit, und es entstehen weniger Bewegungsartefakte. Bekannte 3D-Lichlaufzeitkameras nutzen eine feste Anzahl von Abtastwerten, so dass die Wahl des passenden Messverfahrens nur über den Kauf der Kamera erfolgen kann.

Ein weiterer Aspekt der Lichtlaufzeitmessung mit einem Phasenverfahren ist der begrenzte Eindeutigkeitsbereich, denn die Phasenverschiebung ist nur bis zur Periode der Modulationsfrequenz eindeutig. Um den Eindeutigkeitsbereich und damit die Reichweite der Kamera zu erweitern, wird häufig aufeinanderfolgend mit mehreren verschiedenen Modulationsfrequenzen gemessen. Ein alternatives Absenken der Modulationsfrequenz kommt nur in engen Grenzen in Betracht, weil dadurch die Messgenauigkeit beeinträchtigt wird. Die Messung mit mehreren Modulationsfrequenzen kombiniert eine hohe Tiefenauflösung mit einem großen Tiefenmessbereich. Diese Reichweitenerhöhung ist für jede Anzahl Messwiederholungen möglich.

Bei Einsatz in mobilen Anwendungen, etwa an einem Fahrzeug, ist der Energieverbrauch der Kamera entscheidend für dessen Laufzeit. Dabei trägt die Beleuchtung zur Erzeugung der Tiefenwerte einen großen Teil zu dem Energieverbrauch bei. Zur Einsparung von Energie gibt es aber bisher keine befriedigende Lösung. Eine Messung mit nur einer einzigen Modulationsfrequenz begrenzt entweder die Messgenauigkeit oder den Eindeutigkeitsbereich beziehungsweise die Reichweite der Kamera. Das gilt in abgeschwächter Form genauso, wenn nicht fest mit einer einzigen Modulationsfrequenz gemessen wird, sondern zeitweise die Anzahl der Modulationsfrequenzen reduziert wird. Eine Abschaltung der Beleuchtung in Pausen, in denen keine Messwerte benötigt werden, macht das System völlig blind. Es bedarf daher eines äußeren Kriteriums und damit Systems, um die Abschaltphasen festzulegen und zu beenden. Wenn die Kamera insgesamt abgeschaltet wird, benötigt sie nach dem Wiedereinschalten einige Zeit, bis sich die Messung wieder thermisch eingeschwungen hat, so dass noch zusätzliche Totzeiten entstehen.

Die EP 3 159 711 A1 offenbart ein System, das mit einem phasenbasierten Lichtlaufzeitverfahren Abstände zu einem Objekt misst. Dabei wird nicht flächig beleuchtet, sondern eine Vielzahl von Einzellasern beleuchtet jeweils einzelne Empfangspixel, um eine größere Reichweite zu erzielen. Hintergrundlicht wird entweder mit Hilfe umgebender Pixel oder durch einen weiteren Belichtungszyklus ohne moduliertes Sendelicht gemessen und dann in der Auswertung abgezogen. In der EP 3 301 479 A1 wird diese digitale Hintergrundkompensation bereits analog durch teilweise Entladung noch vor der Digitalisierung ersetzt. Dazu werden die während der Lichtlaufzeitmessung in einem ersten Belichtungszyklus akkumulierten Ladungen der Pixel in einem zweiten Belichtungszyklus ohne moduliertes Sendelicht partiell je nach vorhandenem Hintergrundlicht wieder entladen.

Die EP 2 894 492 A1 befasst sich mit einem Verfahren zur Lichtlaufzeitmessung mit Pixeln, die jeweils vier Ladungsspeicher aufweisen. Die Ladungsspeicher werden in Zweiergruppen angesteuert.

Aus der WO 2014/022490 A1 ist eine kontextabhängige Anpassung von Kameraparametern bekannt, wie Framerate oder Belichtungszeit.

Die DE 10 2013 207 653 B4 beschreibt ein Lichtlaufzeitkamerasystem mit zwei Auswertemethoden für den Nah- und Fernbereich, zwischen denen je nach Objektabstand umgeschaltet wird. Im Nahbereich werden Objektabstände mit einem einzelnen Phasenmesszyklus und im Fernbereich anhand von mindestens zwei Phasenmesszyklen mit unterschiedlichen Modulationsfrequenzen gemessen.

Die EP 1 777 747 A1 beschreibt eine Pixelvorrichtung für die Erfassung und Demodulation von modulierten elektromagnetischen Wellen, die für eine dreidimensionale Abstandsmessung eingesetzt werden kann. Die Pixelvorrichtung weist je nach Ausführungsform eine unterschiedliche Anzahl von beispielsweise zwei oder vier Ladungskanälen und Speichern auf.

Aus der US 2019/0107608 A1 sind eine Signalverarbeitungseinheit und ein Verfahren für eine Lichtlaufzeitmessung bekannt. Zur Erzeugung von Abtastwerten werden vier Multiplexer und ADC-Kanäle eingesetzt.

Es ist daher Aufgabe der Erfindung, eine besser angepasste 3D-Lichtlaufzeitkamera anzugeben.

Diese Aufgabe wird durch eine 3D-Lichtlaufzeitkamera und ein Verfahren zur Erfassung dreidimensionaler Bilddaten aus einem Erfassungsbereich nach Anspruch 1 beziehungsweise 15 gelöst. Die 3D-Lichtlaufzeitkamera funktioniert im Kern so, wie dies einleitend beschrieben wurde. Eine Beleuchtungseinheit erzeugt Sendelicht, das mit einer ersten Modulationsfrequenz moduliert wird. Es sei vorsichtshalber gesagt, dass dies eine künstliche Amplitudenmodulation mit einer gewählten Modulationsfrequenz ist, die nicht mit der Trägerfrequenz der eigentlichen Lichtwelle verwechselt werden sollte. Das von Objekten im Erfassungsbereich zurückgeworfene Sendelicht fällt überlagert mit Fremd- oder Hintergrundlicht auf einen Bildsensor mit einer Vielzahl von Empfangselementen oder Pixeln, die daraus ein jeweiliges Empfangssignal erzeugen.

Eine Vielzahl von Demodulationseinheiten gewinnt in einem Lock-In-Verfahren durch Demodulation mit einem Signal der ersten Modulationsfrequenz aus dem jeweiligen Empfangssignal einen Abtastwert. Es wird eine Anzahl von mindestens zwei Messungen mit unterschiedlicher Phase zwischen den Signalen mit der Modulationsfrequenz für das Sendelicht und für die Demodulation durchgeführt. Das sind sequentielle Messwiederholungen durch erneute Belichtung und/oder parallele Messungen in mehreren Ladungsspeichern der Empfangselemente. Aus den mehreren Abtastwerten wird die Phasenlage des Empfangssignals rekonstruiert, um daraus die Lichtlaufzeit und letztlich den Abstand zu erhalten.

Die Messungen werden von einer Steuer- und Auswertungseinheit gesteuert und ausgewertet. Dabei sind die Demodulationseinheiten vorzugsweise bereits in den Pixeln implementiert, die dann auch als ToF-Pixel (ToF, Time of Flight, Lichtlaufzeit) oder Lock-in-Pixel bezeichnet werden. Auch weitere Teile der Steuer- und Auswertungseinheit, insbesondere diejenigen, die für die Messwiederholung und/oder die Rekonstruktion der Phase aus mehreren Abtastwerten zuständig sind, können bereits in den Pixeln oder auf dem Bildsensor implementiert sein.

Die Erfindung geht von dem Grundgedanken aus, eine Anpassung der Anzahl Messwiederholungen zu ermöglichen. Deshalb ist die Steuer- und Auswertungseinheit dafür ausgebildet, die Anzahl Messwiederholungen zu verändern. Mit Messwiederholungen sind nicht wiederholte Bildaufnahmen oder Frames gemeint, sondern die Messwiederholungen, die zu einer Abstandsmessung und damit einer Bildaufnahme oder einem Frame beitragen.

Die Erfindung hat den Vorteil, dass nun eine Abwägung zwischen den Vor- und Nachteilen der Messung mit unterschiedlicher Anzahl von Messwiederholungen möglich wird. Durch eine höhere Anzahl Messwiederholungen wird die Abstandsmessung genauer. Dabei ist die Messgenauigkeit in Abstands- oder Tiefenrichtung gemeint, denn die laterale Auflösung ist durch das Objektiv und die Pixelanzahl bestimmt. Zugleich erhöht sich aber bei einer höheren Anzahl Messwiederholungen auch die Aufnahme- beziehungsweise Auslesezeit je Abstandswert, somit verringert sich die mögliche Framerate, und schnelle Objekte erzeugen mehr Bewegungsartefakte. Diese Vor- und Nachteile gelten spiegelbildlich bei geringerer Anzahl Messwiederholungen. Ein besonders vorteilhafter Aspekt ist, dass ein Energiemanagement möglich wird. Eine Messung mit einer hohen Anzahl Messwiederholungen führt zu einem höheren Energieverbrauch. Somit lässt sich der Energieverbrauch minimieren, indem wann immer möglich mit einer geringen Zahl von Messwiederholungen gearbeitet wird. Die Anpassung ist erfindungsgemäß für aktuelle Anforderungen bis hin zu einer Veränderung für jeden Frame möglich. Herkömmlich dagegen kann allenfalls eine für eine bestimmte Situation geeignete Kamera erworben werden, die dann aber nicht mehr anpassbar ist.

Die Lichtempfangselemente weisen bevorzugt jeweils einen Ladungsspeicher auf und/oder die Anzahl Messwiederholungen beträgt vorzugsweise zwei bis fünf. Derartige Pixel können in einem Messintervall nur einen Abtastwert liefern, so dass sequentielle Messwiederholungen erforderlich sind, um mehrere Abtastwerte zu erhalten. Wie einleitend diskutiert, kann die Phase grundsätzlich mit zwei Messwiederholungen bestimmt werden, berücksichtigt dann aber nicht das Hintergrundlicht. Mit einer dritten Messwiederholung kann das Hintergrundlicht kompensiert werden. Weitere Messwiederholungen gewinnen zusätzliche Abtastwerte beispielsweise bei 0°, 120° und 240° oder 0°, 90°, 180° und 270° und damit Messgenauigkeit, wobei für das Hintergrundlicht noch eine eigene Zusatzmessung vorgesehen sein kann oder nicht, was dann bei vier Phasen plus Hintergrundlichtmessung die Anzahl fünf ergibt. Sicherheitshalber sei klargestellt, dass unter einer Messwiederholung eine Einzelmessung verstanden wird, nicht etwa in wörtlicher Auslegung von Wiederholung bereits zwei Einzelmessungen.

Die Lichtempfangselemente weisen bevorzugt zwei Ladungsspeicher auf, die insbesondere differentiell ausgelesen werden, wobei die Anzahl Messwiederholungen vorzugsweise zwei, drei oder vier beträgt. Zwei Ladungsspeicher liefern bereits in einer Einzelmessung zwei Abtastwerte. Diese können alternativ in einer Ausführungsform mit differentiellen Pixeln nicht einzeln, sondern als Differenz ausgelesen werden. Messwiederholungen dienen hier einerseits wie im Falle nur eines Ladungsspeichers dazu, Abtastwerte bei andere Phasen wie beispielsweise 90° oder 120° zu gewinnen. Es kann aber auch sinnvoll sein, um 180° versetzt erneut zu messen, um Asymmetrien in den beiden von den Ladungsspeichern gebildeten Kanälen auszugleichen. Je nach Ausführungsform kann zwischen allen drei Betriebsmodi gewechselt werden, oder es ist nur eine Umschaltung zwischen zwei Anzahlen möglich, beispielsweise zwischen zwei und vier. Weitere Alternativen mit einer anderen Anzahl Ladungsspeicher je Pixel und/oder Messwiederholungen sind denkbar, beispielsweise vier Ladungsspeicher und zwei Messwiederholungen. Mit einem solchen Pixel stehen schon nach der ersten Messung vier Abtastwerte zur Verfügung, die grundsätzlich für die Phasenbestimmung ausreichen. Zumindest zwei Messwiederholungen können aber sinnvoll sein, um durch doppelte Messung bei 180° Phasenversatz Unterschiede in den Kanälen zu kompensieren, oder es werden sogar vier Messwiederholungen durchgeführt, damit jeder Kanal einmal für jede Phase zuständig ist.

Die Steuer- und Auswertungseinheit ist bevorzugt für eine Veränderung der Anzahl Messwiederholungen für eine folgende Betriebsphase ausgebildet. Das ist eine Art statischer Umschaltung für eine bestimmte Anwendung oder zumindest eine längere Betriebsphase, etwa bei der Initialisierung oder einer Neukonfiguration der Kamera. Die Wahl der erforderlichen Anzahl Messwiederholungen kann eine Parametrierung sein, die auf dem Wissen des Einrichters basiert. Es ist aber auch denkbar, den Einrichter durch Messergebnisse zu unterstützen oder die Wahl aufgrund von Messergebnissen, von einem übergeordneten System empfangener Informationen oder sonstigen äußeren Umständen automatisch zu treffen.

Die Steuer- und Auswertungseinheit ist bevorzugt für eine dynamische Veränderung der Anzahl Messwiederholungen während des Betriebs ausgebildet. Eine dynamische Umschaltung kann flexibel und situativ auf die aktuellen Anforderungen, Rahmenbedingungen und Messergebnisse reagieren. Eine dynamische Umschaltung erfolgt in der Regel häufig und schnell, so wie dies die dynamischen Kriterien vorschreiben.

Die Steuer- und Auswertungseinheit ist bevorzugt dafür ausgebildet, die Anzahl Messwiederholungen automatisch zu verändern. In derartigen Ausführungsformen entscheidet die Kamera selbst über den geeigneten Betriebsmodus mit passender Anzahl Messwiederholungen.

Die Steuer- und Auswertungseinheit ist bevorzugt dafür ausgebildet, die jeweils veränderte Anzahl Messwiederholungen situativ aus den Empfangssignalen und/oder Abstandswerten zu bestimmen. Die Entscheidung der Kamera über den geeigneten Betriebsmodus basiert hier folglich auf den Detektionsergebnissen, und sie wird kameraintern gefällt. Vorzugsweise sind das eher frühe Auswertungsergebnisse einer Bildverarbeitungskette, also Bewertungen von Amplituden- oder Tiefenwerten und dergleichen. Komplexere Auswertungen schon in der Kamera sind aber auch denkbar, beispielsweise Erkennung von Unschärfen durch Bewegungsartefakte (motion blur) oder die Erkennung von Positionen oder sogar Bewegungsmustern erfasster Objekte (Objekttracking). Solche komplexen Bildverarbeitungen können durch externe Rechenkapazitäten eines übergeordneten Systems vor Ort oder auch in einer Cloud oder dergleichen unterstützt werden.

Die Steuer- und Auswertungseinheit ist bevorzugt dafür ausgebildet, eine höhere Anzahl Messwiederholungen einzustellen, wenn ein nahes Objekt oder ein Objekt in einem interessierenden Bereich innerhalb des Erfassungsbereichs erfasst wird. Eine höhere Anzahl Messwiederholungen bedeutet insbesondere drei, vorzugsweise vier. Dadurch erfolgt eine genauere Messung für besonders relevante Objekte. In mobilen Anwendungen sind das regelmäßig nahe Objekte. Ebenso ist denkbar, dass in dem Erfassungsbereich der Kamera interessierende Bereiche definiert sind (ROI, region of interest), die vorab festgelegt oder konfiguriert sind, aber auch von der Kamera selbst beispielsweise um zuvor erfasste Objekte gelegt sein können.

Die Steuer- und Auswertungseinheit ist bevorzugt dafür ausgebildet, eine geringere Anzahl von Messwiederholungen einzustellen, solange kein Objekt erfasst ist und/oder solange nur als uninteressant klassifizierte Objekte erfasst sind. Eine geringere Anzahl von Messwiederholungen bedeutet insbesondere drei, vorzugsweise zwei. Solange kein relevantes Objekt erfasst ist, kommt es auf Messgenauigkeit nicht an, sondern eher darauf, ein neu auftauchendes Objekt überhaupt zu bemerken, woraufhin dann die Anzahl Messwiederholungen wieder erhöht werden kann. Es hängt von der Anwendungssituation ab, welche Objekte relevant sind. In einigen Fällen erfolgt die Umschaltung auf eine geringere Anzahl Messwiederholungen nur bei freiem Sichtfeld, was wiederum auf bestimmte ROIs beschränkt sein kann. Andererseits können Objekte auch als uninteressant klassifiziert sein und damit bezüglich einer Umschaltung auf eine geringere Anzahl Messwiederholungen so behandelt werden, als seien sie nicht vorhanden. Diese Klassifikation kann vorab durch Konfiguration oder eine Referenzaufnahme oder während des Betriebs durch einen Objektklassifikator erfolgen. Beispiele sind Wände eines Raumes, ein leeres Förderband oder über einen gewissen Zeitraum relativ zu der Kamera unbewegliche Objekte.

Die Steuer- und Auswertungseinheit ist bevorzugt dafür ausgebildet, die Anzahl Messwiederholungen zyklisch oder nach einem festgelegten Schema zu verändern. Eine zyklische Umschaltung bedeutet beispielsweise eine Veränderung alle n≥1 Frames oder zu bestimmten Zeiten. Die Umschaltung erfolgt hier unabhängig von einem Detektionsergebnis. Das soll aber nicht ausschließen, dass ein Detektionsergebnis den Zyklus oder das Schema modifiziert oder zumindest vorübergehend außer Kraft setzt.

Die Steuer- und Auswertungseinheit ist bevorzugt dafür ausgebildet, die Anzahl Messwiederholungen entsprechend einem Energieverbrauch der 3D-Lichtlaufzeitkamera einzustellen, insbesondere um den Energieverbrauch konstant zu halten oder eine Mindestbetriebsdauer zu gewährleisten. Wie schon erwähnt, benötigen Messungen mit mehr Messwiederholungen auch mehr Energie, so dass über die Veränderung der Anzahl Messwiederholungen ein Energiemanagement möglich wird. Wenn dadurch die mittlere elektrische Leistung konstant bleibt, wird das thermische Gleichgewicht in der Kamera erhalten, und entsprechende Messschwankungen werden vermieden. Ein Energiemanagement ist bei energieautarken Kameras von besonderem Interesse, das eine Umschaltung zwischen den Betriebsmodi entsprechend der geforderten Betriebsdauer und verfügbaren Akkuladung steuert.

Die Kamera weist bevorzugt einen Steuereingang auf, wobei die Steuer- und Auswertungseinheit dafür ausgebildet ist, die Anzahl Messwiederholungen entsprechend einem Steuersignal an dem Steuereingang einzustellen. In derartigen Ausführungsformen wird die Wahl einer passenden Anzahl Messwiederholungen von außen vorgegeben. Das Steuersignal wird über einen besonderen Steuereingang oder im Rahmen eines Datenaustauschs an vorhandenen Schnittstellen der Kamera vorgegeben. Die oben genannten kamerainternen Kriterien zur Umschaltung, wie Bewertung aktueller oder zurückliegender Detektionsergebnisse, können auch außerhalb der Kamera in einem übergeordneten lokalen System oder beispielsweise in einer Cloud ausgewertet werden. Das gilt bevorzugt für komplexere, spätere Schritte einer Bildauswertungskette, wie ein Objekttracking. Dabei besteht auch die Möglichkeit einer gemeinsamen oder geteilten Auswertung intern und extern. Manche Umschaltkriterien, etwa eine Fahrzeuggeschwindigkeit oder eine geplante oder ausgeführte Kurvenfahrt, stehen nur extern zur Verfügung. Die äußere Vorgabe kann auch durch einen Benutzer erfolgen, der beispielsweise einen als Taste für einen Energiesparmodus ausgebildeten Steuereingang betätigt. Bei einer übergeordneten Auswertung beispielsweise in einer Cloud können auch die Messdaten mehrerer Kameras eines Messsystems bestehend aus mehreren Kameras herangezogen werden, um ein Kriterium für die Veränderung der Messwiederholungen einzelner oder aller Kameras zu ermitteln und dann entsprechende Steuersignale zu erzeugen.

Die Steuer- und Auswertungseinheit ist bevorzugt dafür ausgebildet, weitere Messwiederholungen mit mindestens einer zweiten Modulationsfrequenz durchzuführen, wobei insbesondere die Modulationsfrequenzen und/oder die Modulationsfrequenzanzahl verändert wird. Durch Messen mit zwei oder mehr Modulationsfrequenzen wird der Eindeutigkeitsbereich erweitert, wie einleitend erläutert. Für jede Modulationsfrequenz werden jeweils mehrere Messwiederholungen benötigt, wobei die Anzahl Messwiederholungen wiederum vorzugsweise, aber nicht notwendig je Modulationsfrequenz dieselbe ist. Eine Veränderung der Anzahl Modulationsfrequenzen und/oder mindestens einer der dabei verwendeten Modulationsfrequenzen selbst kann nach Abwägung von Reichweite, Messgenauigkeit, Messdauer und Energieverbrauch erfolgen. Die Kamera wird so noch flexibler einsetzbar.

Die Steuer- und Auswertungseinheit ist bevorzugt dafür ausgebildet, eine Framerate zu verändern, mit der Abstandswerte erzeugt werden. Die Framerate kann nicht schneller werden als durch die jeweils gewählte Anzahl Messwiederholungen vorgegeben. Möglich ist aber eine Verlangsamung beziehungsweise eine Zurücknahme einer Verlangsamung. Beispielsweise kann eine Messung mit zwei Messwiederholungen durch Wartephasen künstlich die gleiche Framerate erhalten, wie sie eine Messung mit vier Messwiederholungen hätte, oder eine noch geringere Framerate eingestellt werden. So lässt sich insbesondere zusätzlich Energie sparen.

Die Steuer- und Auswertungseinheit ist bevorzugt dafür ausgebildet, das Sendelicht der Beleuchtungseinheit anzupassen. Dafür gibt es zahlreiche denkbare Kriterien, etwa die erforderliche Reichweite der Messung, bestimmte interessierende Bereiche innerhalb des Erfassungsbereichs oder die Fremdlichtbelastung. Die Anpassung kann durch Ein- und Abschalten von Beleuchtungsmodulen der Beleuchtungseinheit erfolgen oder alternativ mittels einer adaptiven Beleuchtungseinheit, die derart gestaltet ist, dass das Sendelicht örtlich und/oder zeitlich selektiv in der Szene verteilt werde kann.

Die Steuer- und Auswertungseinheit ist bevorzugt dafür ausgebildet, bei einer Veränderung der Anzahl Messwiederholungen einen zu der Anzahl passenden von mehreren gespeicherten Kalibrierdatensätzen zu verwenden. Damit ist die Kamera sofort und auf sehr einfache Weise für die jeweilige Anzahl Messwiederholungen richtig kalibriert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer 3D-Lichtlaufzeitkamera;
- Fig. 2: eine Draufsicht auf die Empfangspixel einer 3D-Lichtlaufzeitkamera;
- Fig. 3a: eine Darstellung eines herkömmlichen Modulationsschemas mit zwei Abtastwerten zur Abstandsmessung; und
- Fig. 3b: eine Darstellung eines herkömmlichen erweiterten Modulationsschemas mit vier Abtastwerten.

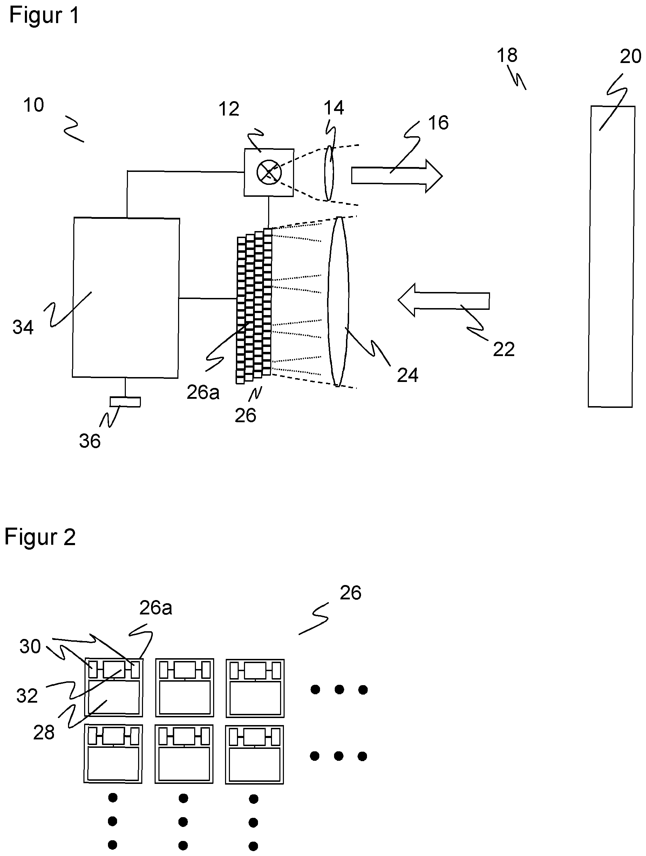

Figur 1 zeigt eine schematische Blockdarstellung einer 3D-Lichtlaufzeitkamera 10. Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Der Lichtsender 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Zur Reduktion der gegenseitigen Beeinflussung mehrerer 3D-Lichtlaufzeitkameras kann auch ein künstlicher Jitter beziehungsweise eine Art Codierung (Spread Spectrum) verwendet werden. Durch die Frequenz entsteht ein begrenzter Eindeutigkeitsbereich der Abstandsmessung, so dass für große Reichweiten der 3D-Lichtlaufzeitkamera 10 kleine Modulationsfrequenzen erforderlich sind. Alternativ werden Messungen bei zwei oder mehr Modulationsfrequenzen durchgeführt, um in Kombination der Messungen den Eindeutigkeitsbereich zu vergrößern.

Trifft das Sendelicht 16 in dem Erfassungsbereich 18 auf ein Objekt 20, so wird ein Teil als Empfangslicht 22 zu der 3D-Lichtlaufzeitkamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Lichtempfangselementen oder Empfangspixeln 26a auf. Die Auflösung des Bildsensors 26 kann von zwei oder einigen bis hin zu tausenden oder Millionen Empfangspixeln 26a reichen.

Figur 2 zeigt eine Draufsicht auf einen Ausschnitt der Empfangspixel 26a des Bildsensors 26. Diese Ansicht ist rein funktional und schematisch, der konkrete Halbleiteraufbau des Bildsensors 26 ist nicht Gegenstand dieser Beschreibung. Die Empfangspixel 26a weisen jeweils eine lichtempfindliche Fläche 28 und mindestens einen Ladungsspeicher 30 auf, beispielsweise einen Kondensator. In der Ausführungsform gemäß Figur 2 sind es beispielhaft zwei Ladungsspeicher 30. Weitere Schaltelemente der Empfangspixel 26a sind sehr schematisch und rein symbolisch in einem Block als Demodulationseinheit 32 zusammengefasst. Die Empfangspixel 26a detektieren in ihren Ladungsspeichern 30 während einer Messdauer oder Integrationszeit das Empfangslicht 22. Dabei steuert die Demodulationseinheit 32 entsprechend der auch für das Modulieren des Sendelichts 16 verwendeten Modulationsfrequenz, wann in dem Ladungsspeicher 30 Ladungen aufgesammelt werden. Es findet folglich eine Demodulation entsprechend einem Lock-In-Verfahren statt.

Zurück zu Figur 1, werden die in den Ladungsspeichern 30 der Empfangspixel 26a aufgesammelten Ladungsmengen ausgelesen, digitalisiert und an eine Auswertungseinheit 34 übergeben. In einer Messung werden durch die beiden Ladungsspeicher 30 zwei Abtastwerte erzeugt. Alternativ zu einem einzelnen Auslesen beider Abtastwerte sind auch differentielle Empfangspixel 26a denkbar, die eine Differenz der beiden Ladungsspeicher 30 ausgeben. Die für die Phasenbestimmung relevante Information ist dabei praktisch gleichwertig, da in der Auswertung ohnehin Differenzen gebildet werden. Um weitere Abtastwerte zu gewinnen, wird die die Messung n-mal wiederholt, vorzugsweise zwei bis vier Mal. Dabei wird jeweils zwischen den Messwiederholungen die Phase zwischen der für das Sendelicht 16 verwendeten Modulationsfrequenz und der in der Demodulationseinheit 32 zum Demodulieren verwendeten Modulationsfrequenz variiert.

In einer konkrete vorteilhaften Ausführungsform werden Abtastwerte je nach Anzahl Messwiederholungen wie folgt gewonnen. Dabei wird vorausgesetzt, dass die beiden Ladungsspeicher 30 um 180° zueinander versetzt abtasten, da Abweichungen hiervon zwar möglich, aber in aller Regel unvorteilhaft sind. Bei zwei Messwiederholungen wird in der ersten Messwiederholung mit 0° und 180°, in der zweiten Messwiederholung mit 90° und 270° gemessen. Bei drei Messwiederholungen sind es vorzugsweise 0°, 180°; 120°, 300° und 240°, 60° und bei vier Messwiederholungen 0°, 180° ; 90°, 270° ; 180° , 0°; 270°, 90°. Letzteres erscheint redundant, dient aber dazu, hardwarebedingte Unterschiede in den beiden durch die Ladungsspeicher 30 gebildeten Kanälen zu kompensieren. Somit liegen dann insgesamt acht einzelne Abtastwerte A, B, C, D, A', B', C', D' beziehungsweise bei differentiellen Pixeln vier Differenzen von Abtastwerten A-B, C-D, A'-B', C'-D' vor. Die gesuchte Phase ergibt sich dann als arctan(((C-D)-(C'-D'))/((A-B)-(A'-B'))). Alle genannten Zahlenwerte können auch variiert werden, beispielsweise indem bei vier Messwiederholungen nicht um jeweils 90°, sondern nur 45° verschoben wird, womit dann die Hardwarekompensation entfällt, dafür aber mehr Zwischenwerte erfasst sind.

Aus den mehreren Abtastwerten rekonstruiert nun die Steuer- und Auswertungseinheit 34 den Phasenversatz aufgrund der Lichtlaufzeit durch den Erfassungsbereich 18, der in einen Abstandswert je Empfangspixel 26a umgerechnet werden kann. Es entsteht ein dreidimensionales Bild, Abstandsbild oder Tiefenbild, das an einer Schnittstelle 36 ausgegeben wird. Die Schnittstelle 36 oder alternativ eine oder mehrere weitere, nicht gezeigte Anschlüsse dienen umgekehrt der Eingabe von Steuersignalen oder Parametrierungen der 3D-Lichtlaufzeitkamera 10.

Die Aufteilung der Figuren 1 und 2 in einen Bildsensor 26 mit Empfangspixeln 26a, die jeweils eine Demodulationseinheit 32 aufweisen, und eine Steuer- und Auswertungseinheit 34 ist nur eine bevorzugte Ausführungsform. Die Steuer- und Auswertungsfunktionalität kann auch anders verteilt sein. Weiterhin ist die dargestellte Beleuchtung eine Flächenbeleuchtung, wozu beispielsweise ein Diffusor als Teil der Sendeoptik 14 eingesetzt wird. In einer anderen Ausführungsform wird eine Anordnung zahlreicher Einzellichtquellen des Lichtsenders 12 scharf in den Erfassungsbereich 18 projiziert, so dass im Ergebnis die Empfangspixel 26a einzeln beleuchtet werden und die Reichweite sich erhöht. Weiterhin kann die Beleuchtung abweichend von der Darstellung nicht in die 3D-Lichtlaufzeitkamera 10 integriert, sondern davon baulich beziehungsweise räumlich getrennt werden.

Erfindungsgemäß ist nun vorgesehen, dass die 3D-Lichtlaufzeitkamera 10 eine Umschaltung der Anzahl von Messwiederholungen je Lichtlaufzeitmessung ermöglicht. Sie stellt folglich mehrere Betriebsmodi zur Verfügung, in denen sie jeweils mit einer anderen Anzahl von Messwiederholungen und somit mehr oder weniger Abtastwerten arbeitet. Dadurch kann für jeweilige Anwendungen, Umgebungen und Anforderungen jeweils der optimale Betriebszustand eingestellt werden. Eine Messung mit einer höheren Anzahl Messwiederholungen hat eine hohe Messgenauigkeit, benötigt aber eine längere Messdauer. Umgekehrt ist die Aufnahme- und Verarbeitungszeit bei weniger Messwiederholungen kürzer und insbesondere bei nur zwei Messwiederholungen minimal, aber die Abstandsmessung nicht so genau. Es besteht also eine Austauschbeziehung zwischen Messgenauigkeit und Reaktionszeit, und durch Umschaltung der Anzahl Messwiederholungen kann dazwischen jeweils das Optimum eingestellt werden.

Alternativ zu der in Figur 2 gezeigten Ausführungsform mit zwei Ladungsspeichern 30 sind auch mehr oder weniger Ladungsspeicher vorstellbar. Bei nur einem Ladungsspeicher wird nur ein Abtastwert je Messung gewonnen. Zwei Messwiederholungen bestimmen hier die Phase wie einleitend anhand der Figur 3a erläutert nur unter Vernachlässigung von Hintergrundlicht, so dass vorzugsweise zumindest eine dritte Messwiederholung vorgenommen wird. Durch weitere Messwiederholungen lässt sich, soweit die längere Messzeit in Kauf genommen wird und die Szenerie ausreichend statisch ist, jede beliebige Anzahl von Abtastwerten erzeugen. Mit mehr Ladungsspeichern, beispielsweise vier Ladungsspeichern, werden schon je Messwiederholung zusätzliche Abtastwerte gewonnen, so das in gewisser Weise Ladungsspeicher gegen Messwiederholungen getauscht werden können.

Für die unterschiedlichen Betriebsmodi können jeweils passende Kalibrierdaten hinterlegt werden. Eine herkömmliche Kamera nutzt nur einen Satz Kalibrierdaten für ihre fixe Anzahl von Messwiederholungen. Durch Auswahl eines jeweils passenden Satzes Kalibrierdaten für die aktuell gewählte Anzahl Messwiederholungen wird die Genauigkeit der Messung der 3D-Lichtlaufzeitkamera 10 nochmals erhöht.

Die Steuer- und Auswertungseinheit 34 ist in einigen Ausführungsformen zu einer Vorverarbeitung der 3D-Bilddaten ausgebildet. Sie führt beispielsweise Glättungen mit einem Filterkern der Größe 3x3 oder 5x5 oder sonstige Bildverarbeitungen durch. Diese Bildverarbeitungen können an- und abgeschaltet oder unterschiedlich parametriert werden. Speziell ist denkbar, diese Anpassung jeweils in Abhängigkeit der Anzahl Messwiederholungen vorzunehmen, mit denen die rohen 3D-Bilddaten gemessen wurden.

Prinzipiell ist die Umschaltung zwischen beliebigen Anzahlen von Messwiederholungen möglich. Von besonderer praktischer Relevanz sind zwei, drei oder vier Messwiederholungen. Die Umschaltung kann zwischen nur zweien dieser Anzahlen oder allen drei Anzahlen möglich sein.

Eine kurze Reaktions- oder Ansprechzeit ist besonders für Anwendungen in der Sicherheitstechnik vorteilhaft. Eine dort eingesetzte 3D-Lichtlaufzeitkamera 10 ist dann wie einleitend beschrieben sicher ausgebildet. Sie ist beispielsweise in einem Betriebsmodus mit nur zwei Messwiederholungen sehr schnell und kann gegebenenfalls nach Erfassung eines Objektes in einen Betriebsmodus mit höherer Messgenauigkeit übergehen, um die Gefahr zu beurteilen.

Die Kriterien, nach denen zwischen den Betriebsmodi mit jeweiliger Anzahl Messwiederholungen umgeschaltet werden kann, sind vielfältig. Denkbar sind zunächst händische Umschaltungen durch den Benutzer oder Einrichter. Es wird eine passende Kamerakonfiguration für eine bestimmte Anwendung oder Anwendungssituation eingestellt, die dann für eine nachfolgende Betriebsphase erhalten bleibt. Das muss auch keine feste Vorgabe für die Anzahl Messwiederholungen, sondern kann beispielsweise auch ein vorgegebener Wechselzyklus sein. Derartige Benutzervorgaben erfolgen vorzugsweise bei der Initialisierung oder Inbetriebnahme beziehungsweise bei einer Neukonfigurierung.

Ein besonderer Vorteil ergibt sich durch die Möglichkeit einer dynamischen Umschaltung, die auch situationsbezogen sein kann. Die Entscheidung über die jeweilige Umschaltung kann automatisch in der 3D-Lichtlaufzeitkamera 10, von außen getriggert oder gemeinsam intern und extern getroffen sein.

In die Entscheidung über die Umschaltung fließen vorzugsweise eigene Detektionsergebnisse ein, d.h. es werden Messdaten, insbesondere Tiefen- oder Amplitudenmesswerte, aber auch komplexere Bildverarbeitungsergebnisse aus den letzten n≥1 Frames sowie möglicherweise auch externe Daten eines übergeordneten Systems einbezogen.

Beispielsweise kann bei freiem Erfassungsbereich 18 mit einer minimalen Anzahl von nur zwei Messwiederholungen gemessen werden. Die höhere Messunsicherheit kann bei freiem Sichtfeld in Kauf genommen werden. Der Erfassungsbereich 18 muss nicht leer sein, sondern kann erwartete oder uninteressante Objekte enthalten. Ein Beispiel ist die Anwendung der 3D-Lichtlaufzeitkamera 10 in einer Förderbandanwendung, wo so lange mit nur zwei Messwiederholungen gemessen wird, wie das Förderband leer ist. Die Erfassung des Förderbands selbst nimmt also keinen Einfluss auf die Umschaltung. Sobald jeweils ein relevantes Objekt erfasst ist, wird auf eine höhere Anzahl Messwiederholungen umgeschaltet.

Auslöser für eine Umschaltung auf eine höhere Anzahl Messwiederholungen kann die Erfassung eines Objekts unterhalb eines Mindestabstands sein, das dann in Folgemessungen präziser lokalisiert werden soll. Beispielsweise wird so in mobilen Anwendungen auf ein Hindernis reagiert, um rechtzeitig anzuhalten oder auszuweichen. Ein weiterer Anwendungsfall ist das Andocken eines autonomen Fahrzeugs an eine Ladestation oder zur Ladungsübergabe, das in dieser Phase mit höchster Genauigkeit misst, um sich optimal zu platzieren.

Das relevante Sichtfeld kann jeweils auf einen oder mehrere interessierende Bereiche eingeschränkt sein. Der Erfassungsbereich 18 gilt dann beispielsweise schon als frei, wenn die interessierenden Bereiche es sind. Umgekehrt kann die Erfassung eines Objekts in einem interessierenden Bereich eine Messung hoher Genauigkeit mit einer hohen Anzahl Messwiederholungen auslösen. Interessierende Bereiche sind eine vergleichsweise einfache Bildauswertung, und auch komplexerer Bildauswertungsverfahren wie ein Objekttracking sind denkbar. Dann wird beispielsweise anhand einer Objektgeschwindigkeit oder einer Extrapolation der Objektbewegung umgeschaltet.

Die Umschaltung kann in Ergänzung zu oder anstelle einer Berücksichtigung von Detektionsergebnissen auch von Rahmenbedingungen und sonstiger Sensorik abhängig gemacht werden. Entsprechende Informationen oder Entscheidungen erhält die 3D-Lichtlaufzeitkamera 10 über ihre Schnittstelle 36 von extern. Ein Beispiel hierfür ist die mit Hilfe einer Fahrzeugsteuerung ermittelte aktuelle Fahrzeuggeschwindigkeit oder eine geplante oder aktuelle durchgeführte Bewegungsbahn. Bei schneller Fahrt ist eine kleinere Anzahl von Messwiederholungen günstiger, während bei langsamer Fahrt genug Messzeit für eine genaue Messung mit vielen Messwiederholungen zur Verfügung steht. Oder es wird beispielsweise während einer Kurvenfahrt auf eine Anzahl von zwei Messwiederholungen umgeschaltet, da es hier eher auf kurze Messzeiten ankommt und eine Anzahl von vier Messwiederholungen bei den hohen Winkelgeschwindigkeiten aufgrund von Bewegungsartefakten zu viele Messfehler oder ungültige Messwerte erzeugen würde. In dem oben schon genannten Beispiel des Andockens an eine Ladestation oder eine Übergabestelle für eine Ladung muss diese Situation nicht aus den Detektionsergebnissen erkannt werden. Dies ist der Navigation beziehungsweise Fahrzeugsteuerung bekannt, die rechtzeitig eine Umschaltung auslösen kann.

Eine dynamische Umschaltung muss aber auch nicht situativ sein. Stattdessen ist eine zyklische Umschaltung nach jedem oder jedem n-ten Frame vorstellbar, oder ein anderes vorgegebenes Schema zwischen zwei oder mehr verschiedenen Anzahlen von Messwiederholungen.

Bisher wurde der Aspekt der Messgenauigkeit und Messdauer in den Vordergrund gestellt. Zudem hängt der Energieverbrauch der 3D-Lichtlaufzeitkamera 10 von der Anzahl Messwiederholungen ab. Die Umschaltung kann also auch Teil eines Energiemanagements sein. Beispielsweise erfolgt die Umschaltung so, dass die mittlere elektrische Leistung konstant bleibt. Dadurch bleibt die 3D-Lichtlaufzeitkamera 10 im thermischen Gleichgewicht, was sich vorteilhaft für die Messgenauigkeit auswirkt. Allgemein wird der Energieverbrauch minimiert, wenn jede Möglichkeit genutzt wird, auf eine geringere Anzahl Messwiederholungen umzuschalten. Es kann auch vom Ladezustand eines Akkus und der noch erforderlichen Betriebsdauer abhängig gemacht werden, ob eine Umschaltung auf eine größere Anzahl Messwiederholungen erfolgt.

Es gibt zusätzlich zu der Umschaltung der Anzahl Messwiederholungen weitere Parameter, die sich für die Anpassung der Kameraeigenschaften und des Energieverbrauchs nutzen lassen. Wie erläutert, lässt sich der Eindeutigkeitsbereich durch Verwendung mehrerer Modulationsfrequenzen erhöhen. Die Anzahl verwendeter Modulationsfrequenzen und die Modulationsfrequenzen selbst sind Parameter, mit denen sich Messbereich, Messgenauigkeit und Energieverbrauch pro Abstandsmessung ändern lassen. Diese Parameter sind unabhängig von der Anzahl Messwiederholungen.

Die Framerate ist ebenfalls variabel, und durch geringere Framerate lässt sich nochmals der Energieverbrauch reduzieren. Die Framerate lässt sich nur auf einen Maximalwert erhöhen, der durch die gewählte Anzahl Messwiederholungen und die dafür benötigte Messdauer begrenzt ist. In manchen Ausführungsformen gibt es eine zeitliche Mittelung, die zwischen verschiedenen Frames angepasst beziehungsweise an- und ausgeschaltet werden kann.

Die Beleuchtungseinheit 12 trägt entscheidend zum Energieverbrauch der 3D-Lichtlaufzeitkamera 10 bei. Eine adaptive Beleuchtung, die insbesondere deren Ausgangsleistung anpasst, leistet daher ebenfalls einen Beitrag zu einer geringeren Leistungsaufnahme. Dazu können auch je nach aktueller Situation einzelne von mehreren Beleuchtungsmodulen der Beleuchtungseinheit 12 abgeschaltet werden. Auch die Belichtungszeit könnte variiert werden oder die Verteilung des Sendelichtes kann mittels einer geeigneten adaptiven Beleuchtung örtlich und/oder zeitlich selektiv erfolgen.

## Patentansprüche

1. 3D-Lichtlaufzeitkamera (10) zur Erfassung dreidimensionaler Bilddaten aus einem Erfassungsbereich (18), die eine Beleuchtungseinheit (12) zum Aussenden von Sendelicht (16), das mit einer ersten Modulationsfrequenz moduliert ist, einen Bildsensor (26) mit einer Vielzahl von Empfangselementen (26a) zum Erzeugen eines jeweiligen Empfangssignals, eine Vielzahl von Demodulationseinheiten (32) zum Demodulieren der Empfangssignale mit der ersten Modulationsfrequenz zur Gewinnung von Abtastwerten sowie eine Steuer- und Auswertungseinheit (34) aufweist, die dafür ausgebildet ist, die Beleuchtungseinheit (12) und/oder die Demodulationseinheiten (32) für eine Anzahl Messwiederholungen bei jeweils unterschiedlichem Phasenversatz zwischen der ersten Modulationsfrequenz für das Sendelicht (16) und der ersten Modulationsfrequenz für das Demodulieren anzusteuern und aus den durch die Messwiederholungen je Lichtempfangselement (26a) gewonnenen Abtastwerten die Phasenlage des Empfangssignals zu rekonstruieren, um daraus einen Abstandswert zu bestimmen,
**dadurch gekennzeichnet,**
**dass** die Steuer- und Auswertungseinheit (34) weiterhin dafür ausgebildet ist, die Anzahl Messwiederholungen, die zu einem Abstandswert beitragen, zu verändern.

2. 3D-Lichtlaufzeitkamera (10) nach Anspruch 1,
wobei die Lichtempfangselemente (26a) jeweils einen Ladungsspeicher (30) aufweisen und/oder die Anzahl Messwiederholungen zwei bis fünf beträgt.

3. 3D-Lichtlaufzeitkamera (10) nach Anspruch 1 oder 2,
wobei die Lichtempfangselemente zwei Ladungsspeicher (30) aufweisen, die insbesondere differentiell ausgelesen werden, und/oder wobei die Anzahl Messwiederholungen zwei, drei oder vier beträgt.

4. 3D-Lichtlaufzeitkamera (10) nach einem der vorhergehenden Ansprüche, wobei die Steuer- und Auswertungseinheit (34) für eine Veränderung der Anzahl Messwiederholungen für eine folgende Betriebsphase ausgebildet ist.

5. 3D-Lichtlaufzeitkamera (10) nach einem der Ansprüche 1 bis 3,
wobei die Steuer- und Auswertungseinheit (34) für eine dynamische Veränderung der Anzahl Messwiederholungen während des Betriebs ausgebildet ist.

6. 3D-Lichtlaufzeitkamera (10) nach Anspruch 5,
wobei die Steuer- und Auswertungseinheit (34) dafür ausgebildet ist, die Anzahl Messwiederholungen automatisch zu verändern.

7. 3D-Lichtlaufzeitkamera (10) nach Anspruch 5 oder 6,
wobei die Steuer- und Auswertungseinheit (34) dafür ausgebildet ist, die jeweils veränderte Anzahl Messwiederholungen situativ aus den Empfangssignalen und/oder Abstandswerten zu bestimmen.

8. 3D-Lichtlaufzeitkamera (10) nach einem Ansprüche 5 bis 7,
wobei die Steuer- und Auswertungseinheit (34) dafür ausgebildet ist, eine höhere Anzahl Messwiederholungen einzustellen, wenn ein nahes Objekt oder ein Objekt in einem interessierenden Bereich innerhalb des Erfassungsbereichs (18) erfasst wird und/oder eine geringere Anzahl von Messwiederholungen einzustellen, solange kein Objekt erfasst ist und/oder solange nur als uninteressant klassifizierte Objekte erfasst sind.

9. 3D-Lichtlaufzeitkamera (10) nach einem Ansprüche 5 bis 8,
wobei die Steuer- und Auswertungseinheit (34) dafür ausgebildet ist, die Anzahl Messwiederholungen zyklisch oder nach einem festgelegten Schema zu verändern.

10. 3D-Lichtlaufzeitkamera (10) nach einem der vorhergehenden Ansprüche,
wobei die Steuer- und Auswertungseinheit (34) dafür ausgebildet ist, die Anzahl Messwiederholungen entsprechend einem Energieverbrauch der 3D-Lichtlaufzeitkamera (10) einzustellen, insbesondere um den Energieverbrauch konstant zu halten oder eine Mindestbetriebsdauer zu gewährleisten.

11. 3D-Lichtlaufzeitkamera (10) nach einem der vorhergehenden Ansprüche,
die einen Steuereingang (36) aufweist, und wobei die Steuer- und Auswertungseinheit (34) dafür ausgebildet ist, die Anzahl Messwiederholungen entsprechend einem Steuersignal an dem Steuereingang (36) einzustellen.

12. 3D-Lichtlaufzeitkamera (10) nach einem der vorhergehenden Ansprüche,
wobei die Steuer- und Auswertungseinheit (34) dafür ausgebildet ist, weitere Messwiederholungen mit mindestens einer zweiten Modulationsfrequenz durchzuführen, wobei insbesondere die Modulationsfrequenzen und/oder die Modulationsfrequenzanzahl verändert wird.

13. 3D-Lichtlaufzeitkamera (10) nach einem der vorhergehenden Ansprüche,
wobei die Steuer- und Auswertungseinheit (34) dafür ausgebildet ist, eine Framerate zu verändern, mit der Abstandswerte erzeugt werden, und/oder das Sendelicht (16) der Beleuchtungseinheit (12) anzupassen.

14. 3D-Lichtlaufzeitkamera (10) nach einem der vorhergehenden Ansprüche,
wobei die Steuer- und Auswertungseinheit (34) dafür ausgebildet ist, bei einer Veränderung der Anzahl Messwiederholungen einen zu der Anzahl passenden von mehreren gespeicherten Kalibrierdatensätzen zu verwenden.

15. Verfahren zur Erfassung dreidimensionaler Bilddaten aus einem Erfassungsbereich (18), bei dem Sendelicht (16) ausgesandt wird, das mit einer ersten Modulationsfrequenz moduliert wird, Empfangslicht (22) aus dem Erfassungsbereich (18) empfangen und daraus ortsaufgelöst eine Vielzahl von Empfangssignalen erzeugt wird, die Empfangssignale mit der ersten Modulationsfrequenz zur Gewinnung von Abtastwerten demoduliert werden, eine Anzahl Messwiederholungen bei jeweils unterschiedlichem Phasenversatz zwischen der ersten Modulationsfrequenz für das Sendelicht (16) und der ersten Modulationsfrequenz für das Demodulieren durchgeführt wird und aus den durch die Messwiederholungen gewonnenen Abtastwerten jeweils die Phasenlage des Empfangssignals rekonstruiert und daraus ein Abstandswert bestimmt wird,
**dadurch gekennzeichnet, dass** die Anzahl Messwiederholungen, die zu einem Abstandswert beitragen, verändert wird.

## Claims

1. A 3D time-of-flight camera (10) for acquiring three-dimensional image data from a detection area (18), comprising an illumination unit (12) for transmitting transmitted light (16) modulated at a first modulation frequency, an image sensor (26) having a plurality of receiving elements (26a) for generating a respective received signal, a plurality of demodulation units (32) for demodulating the received signals at the first modulation frequency to obtain sample values, and a control and evaluation unit (34) that is configured to control the illumination unit (12) and/or the demodulation units (32) for a number of measurement repetitions at respectively different phase offsets between the first modulation frequency for the transmitted light (16) and the first modulation frequency for the demodulation and to reconstruct the phase position of the received signal from the sample values obtained by the measurement repetitions for each light-receiving element (26a) in order to determine a distance value therefrom, **characterized in that** the control and evaluation unit (34) is further configured to vary the number of measurement repetitions contributing to a distance value.

2. The 3D time-of-flight 3D light camera (10) according to claim 1,
wherein the light receiving elements (26a) each comprise a charge memory (30) and/or the number of measurement repetitions is two to five.

3. The 3D time-of-flight camera (10) according to claim 1 or 2,
wherein the light receiving elements comprise two charge memories (30), which in particular are read out differentially, and/or wherein the number of measurement repetitions is two, three or four.

4. The 3D time-of-flight camera (10) according to any of the preceding claims,
wherein the control and evaluation unit (34) is configured to change the number of measurement repetitions for a subsequent operating phase.

5. The 3D time-of-flight camera (10) according to any of claims 1 to 3,
wherein the control and evaluation unit (34) is configured for dynamically varying the number of measurement repetitions during operation.

6. The 3D time-of-flight camera (10) according to claim 5,
wherein the control and evaluation unit (34) is configured to automatically change the number of measurement repetitions.

7. The 3D time-of-flight camera (10) according to claim 5 or 6,
wherein the control and evaluation unit (34) is configured to determine the respectively changed number of measurement repetitions situationally from the received signals and/or distance values.

8. The 3D time-of-flight camera (10) according to any of claims 5 to 7,
wherein the control and evaluation unit (34) is configured to set a higher number of measurement repetitions when a close object or an object in an area of interest is detected within the detection range (18) and/or to set a lower number of measurement repetitions as long as no object is detected and/or as long as only objects classified as uninteresting are detected.

9. The 3D time-of-flight camera (10) according to any of claims 5 to 8,
wherein the control and evaluation unit (34) is configured to change the number of measurement repetitions cyclically or according to a fixed scheme.

10. The 3D time-of-flight camera (10) according to any of the preceding claims,
wherein the control and evaluation unit (34) is configured to adjust the number of measurement repetitions according to an energy consumption of the 3D time-of-flight camera (10), in particular to keep the energy consumption constant or to ensure a minimum operating time.

11. The 3D time-of-flight camera (10) according to any of the preceding claims, which has a control input (36), and wherein the control and evaluation unit (34) is configured to set the number of measurement repetitions in accordance with a control signal at the control input (36).

12. The 3D time-of-flight camera (10) according to any of the preceding claims, wherein the control and evaluation unit (34) is configured to perform further measurement repetitions with at least a second modulation frequency, wherein in particular the modulation frequencies and/or the number of modulation frequencies are changed.

13. The 3D time-of-flight camera (10) according to any of the preceding claims, wherein the control and evaluation unit (34) is configured to change a frame rate at which distance values are generated and/or to adjust the transmitted light (16) of the illumination unit (12).

14. The 3D time-of-flight camera (10) according to any of the preceding claims, wherein the control and evaluation unit (34) is configured to use one of a plurality of stored calibration data sets matching the number of measurement repetitions when the number of measurement repetitions is changed.

15. A method for acquiring three-dimensional image data from a detection area (18), wherein transmitted light (16) is transmitted which is modulated at a first modulation frequency, received light (22) is received from the detection area (18) and a plurality of received signals are generated therefrom in a spatially resolved manner, the received signals are demodulated at the first modulation frequency in order to obtain sample values, a number of measurement repetitions are carried out with a respective different phase offset between the first modulation frequency for the transmitted light (16) and the first modulation frequency for the demodulation, and the respective phase position of the received signal is reconstructed from the sample values obtained by the measurement repetitions, and a distance value is determined therefrom,
**characterized in that** the number of measurement repetitions which contribute to a distance value is varied.

## Revendications

1. Caméra 3D à temps de vol de lumière (10) pour l'acquisition de données d'image tridimensionnelles à partir d'une zone de détection (18), comprenant une unité d'illumination (12) pour l'émission de lumière émise (16) modulée à une première fréquence de modulation, un capteur d'image (26) ayant une pluralité d'éléments de réception (26a) pour la génération d'un signal de réception respectif, une pluralité d'unités de démodulation (32) pour la démodulation des signaux reçus à la première fréquence de modulation pour obtenir des valeurs d'échantillon, et une unité de commande et d'évaluation (34) qui est configurée pour commander l'unité d'illumination (12) et/ou les unités de démodulation (32) pour un certain nombre de répétitions de mesure avec des déphasages respectivement différents entre la première fréquence de modulation pour la lumière émise (16) et la première fréquence de modulation pour la démodulation et pour reconstruire la position de phase du signal de réception à partir des valeurs d'échantillonnage obtenues par les répétitions de mesure pour chaque élément de réception de lumière (26a) afin de déterminer une valeur de distance à partir de celles-ci,
**caractérisé en ce que** l'unité de commande et d'évaluation (34) est en outre configurée pour faire varier le nombre de répétitions de mesure contribuant à une valeur de distance.

2. Caméra 3D à temps de vol de lumière (10) selon la revendication 1,
dans laquelle les éléments de réception de lumière (26a) comprennent chacun une mémoire de charge (30) et/ou le nombre de répétitions de mesure est de deux à cinq.

3. Caméra 3D à temps de vol de lumière (10) selon la revendication 1 ou 2,
dans laquelle les éléments récepteurs de lumière comprennent deux mémoires de charge (30), qui sont en particulier lues de manière différentielle, et/ou dans laquelle le nombre de répétitions de mesure est de deux, trois ou quatre.

4. Caméra 3D à temps de vol de lumière (10) selon l'une des revendications précédentes,
dans laquelle l'unité de commande et d'évaluation (34) est configurée pour modifier le nombre de répétitions de mesure pour une phase de fonctionnement suivante.

5. Caméra 3D à temps de vol de lumière (10) selon l'une des revendications 1 à 3, dans laquelle l'unité de commande et d'évaluation (34) est configurée pour faire varier dynamiquement le nombre de répétitions de mesure pendant le fonctionnement.

6. Caméra 3D à temps de vol de lumière (10) selon la revendication 5, dans laquelle l'unité de commande et d'évaluation (34) est configurée pour modifier automatiquement le nombre de répétitions de mesure.

7. Caméra 3D à temps de vol de lumière (10) selon la revendication 5 ou 6, dans laquelle l'unité de commande et d'évaluation (34) est configurée pour déterminer le nombre de répétitions de mesure respectivement modifié de manière situationnelle à partir des signaux de réception et/ou des valeurs de distance reçus.

8. Caméra 3D à temps de vol de lumière (10) selon l'une des revendications 5 à 7, dans laquelle l'unité de commande et d'évaluation (34) est configurée pour régler un nombre de répétitions de mesure plus élevé lorsqu'un objet proche ou un objet dans une zone d'intérêt est détecté dans la zone de détection (18) et/ou pour régler un nombre de répétitions de mesure plus faible tant qu'aucun objet n'est détecté et/ou tant que seuls des objets classés comme inintéressants sont détectés.

9. Caméra 3D à temps de vol de lumière (10) selon l'une des revendications 5 à 8, dans laquelle l'unité de commande et d'évaluation (34) est configurée pour modifier le nombre de répétitions de mesure de manière cyclique ou selon un schéma fixe.

10. Caméra 3D à temps de vol de lumière (10) selon l'une des revendications précédentes,
dans laquelle l'unité de commande et d'évaluation (34) est configurée pour ajuster le nombre de répétitions de mesure en fonction d'une consommation d'énergie de la caméra 3D à temps de vol de lumière (10), notamment pour maintenir la consommation d'énergie constante ou pour assurer une durée de fonctionnement minimale.

11. Caméra 3D à temps de vol de lumière (10) selon l'une des revendications précédentes,
qui présente une entrée de commande (36), et dans laquelle l'unité de commande et d'évaluation (34) est configurée pour régler le nombre de répétitions de mesure en fonction d'un signal de commande à l'entrée de commande (36).

12. Caméra 3D à temps de vol de lumière (10) selon l'une des revendications précédentes,
dans laquelle l'unité de commande et d'évaluation (34) est configurée pour effectuer d'autres répétitions de mesure avec au moins une deuxième fréquence de modulation, les fréquences de modulation et/ou le nombre de fréquences de modulation étant notamment modifiés.

13. Caméra 3D à temps de vol de lumière (10) selon l'une des revendications précédentes,
dans laquelle l'unité de commande et d'évaluation (34) est configurée pour modifier une fréquence d'images à laquelle des valeurs de distance sont générées et/ou pour ajuster la lumière transmise (16) de l'unité d'illumination (12).

14. Caméra 3D à temps de vol de lumière (10) selon l'une des revendications précédentes,
dans laquelle l'unité de commande et d'évaluation (34) est configurée pour utiliser l'un d'une pluralité de jeux de données d'étalonnage stockés correspondant au nombre de répétitions de mesure lorsque le nombre de répétitions de mesure est modifié.

15. Procédé d'acquisition de données d'image tridimensionnelles à partir d'une zone de détection (18), dans lequel on émet une lumière d'émission (16) qui est modulée à une première fréquence de modulation, on reçoit une lumière de réception (22) de la zone de détection (18) et on génère à partir de celle-ci une pluralité de signaux de réception à résolution spatiale, on démodule les signaux de réception à la première fréquence de modulation afin d'obtenir des valeurs d'échantillonnage, un certain nombre de répétitions de mesure sont effectuées avec un décalage de phase différent entre la première fréquence de modulation pour la lumière émise (16) et la première fréquence de modulation pour la démodulation, et la position de phase respective du signal de réception est reconstruite à partir des valeurs d'échantillonnage obtenues par les répétitions de mesure, et une valeur de distance est déterminée à partir de celles-ci, **caractérisé en ce que** le nombre de répétitions de mesure qui contribuent à une valeur de distance est modifié.
